# FASCICULE DE BREVET EUROPEEN

(11) **EP 1 217 275 B1**
(45) Date de publication et mention de la délivrance du brevet: **15.09.2004**
(21) Numéro de dépôt: 00127791.2
(22) Date de dépôt: 19.12.2000
(51) Int. Cl.: F16K 31/08

(54) **Vanne électronmagnétique bistable miniature**
Bistabiles, eletromagnetisches Mikroventil
Bi-stable electromagnetic micro-valve

(43) Date de publication de la demande: 26.06.2002
(73) Titulaire: FLUID AUTOMATION SYSTEMS S.A., CH-1290 Versoix (CH)
(72) Inventeur: Seuret, Christophe, 1180 Rolle (CH); Rueff, Yvan, 1299 Crans-près-Céligny (CH); Merz, Peter, 1290 Versoix (CH)
(74) Mandataire: KIRKER & Cie S.A.

(56) Documents cités:
- EP-A- 0 650 002
- EP-A- 0 717 220
- US-A- 4 056 255
- PATENT ABSTRACTS OF JAPAN vol. 010, no. 130 (M-478), 14 mai 1986 (1986-05-14) & JP 60 256691 A (MINATO SEISAKUSHO:KK), 18 décembre 1985 (1985-12-18)

## Description

Le contrôle de la distribution de l'eau est géré dans les appareils sanitaires depuis une dizaine d'années par des électrovannes servo. Ce système offre l'avantage de pouvoir contrôler des débits de fluide importants par des électrovannes de dimensions et de consommation d'énergie réduites.

Le principe de la vanne servo est le suivant : une membrane ferme et ouvre l'orifice principal. Sa position est commandée par une valve dénommée pilote, laquelle est actionnée par un électroaimant. Cette dernière relie par des conduits de diamètre réduit la sortie de la vanne à la chambre intermédiaire, laquelle est connectée à l'arrivée de pression par un trou dans la membrane. La buse principale est maintenue fermée lorsque la différence de pression agissant sur les surfaces supérieure et inférieure de la membrane est positive. Le pilote a pour fonction d'équilibrer la pression hydraulique agissant sur les deux côtés de la membrane en vidant la chambre intermédiaire plus vite qu'elle ne se remplit. Les diamètres des trous de membrane et de l'orifice de la buse du pilote doivent être dimensionnés afin de permettre ce phénomène.

Le pilote est composé traditionnellement d'un électroaimant à piston dont le contre-ressort est de type hélicoïdal. La bistabilité du système est assurée par un aimant d'épaisseur importante situé dans le noyau fixe. Le médium est en contact direct avec les parties mobile et fixe en matériau ferromagnétique de l'électroaimant. Une vanne électromagnétique de l'état de la technique est montrée dans le document EP 0 650 002 A. Ce système offre plusieurs désavantages. En premier lieu, lors de l'utilisation avec de l'eau courante, le risque de blocage de la partie mobile dans l'âme de bobine par un dépôt de calcaire ou une oxydation prématurée des parties métalliques est important.

Deuxièmement, la hauteur importante de l'aimant permanent créant la bistabilité pénalise le rendement énergétique du système magnétique en engendrant un entrefer supplémentaire dans le circuit magnétique. Troisièmement, la linéarité du contre-ressort de l'électroaimant est néfaste au comportement du clapet à l'endurance; la constante de force du ressort hélicoïdal étant relativement faible, il doit être suffisamment précontraint afin de permettre le décollage du plongeur lors de la fermeture de la vanne. La force du clapet sur la buse lorsque la vanne est en position fermée devient ainsi très importante et provoque une usure de l'élastomère après quelques centaines de milliers de commutations.

L'échappement du pilote dans les vannes traditionnelles se situe sur le côté, ce qui nécessite un moulage complexe du conduit.

Le but de la présente invention est de réaliser une vanne électromagnétique bistable ou servo-vanne tendant à obvier aux inconvénients précités des systèmes actuels et permettant la réalisation d'une servo-vanne fiable, de fabrication simple et peu encombrante.

La présente invention a pour objet une vanne servo, ainsi qu'une vanne pilote comprenant les caractéristiques énoncées à la revendication 1.

Le dessin annexé illustre schématiquement et à titre d'exemple une forme d'exécution de la vanne servo selon l'invention comportant une vanne pilote particulière.
La figure 1 illustre une vanne électromagnétique bistable servant de pilote à une vanne servo selon l'invention.
La figure 2 illustre à plus grande échelle une vanne pilote pour la commande d'une vanne servo.

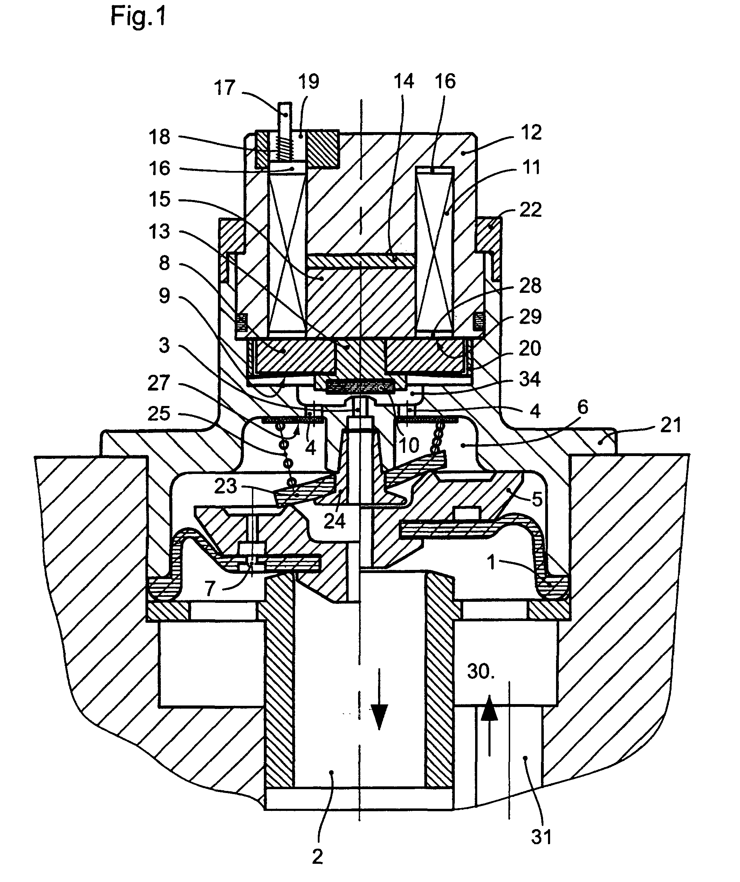

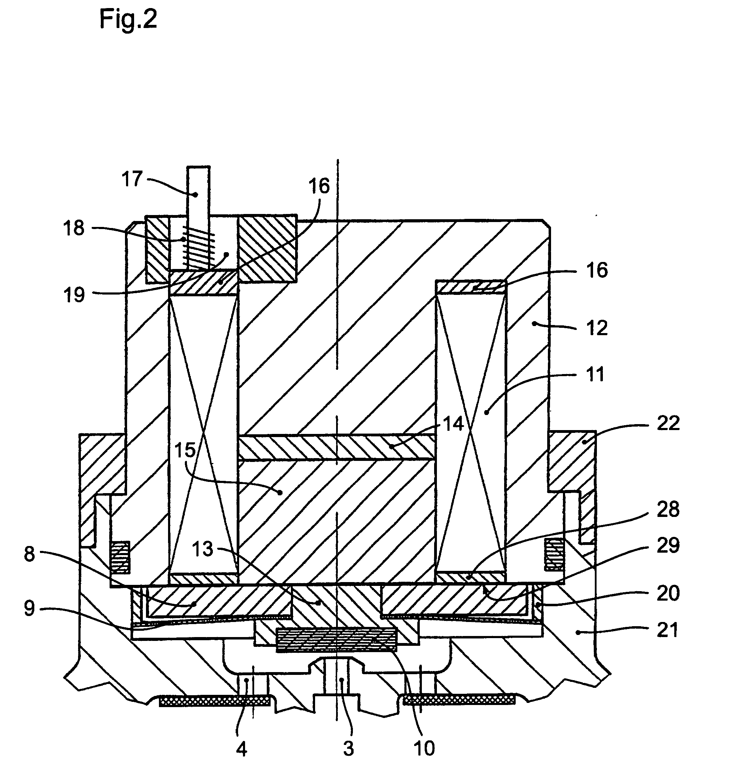

La configuration de la vanne servo selon l'invention est présentée sur la figure 1. Une électrovanne pilote (figure 2) à échappement central est activée par un électroaimant plat. Elle commande une membrane qui ouvre et ferme l'orifice principal de la vanne. Le système entier se présente sous la forme d'une cartouche.

Une première particularité réside donc dans la partie pilote (figure 2). L'activateur est constitué d'un électroaimant à plongeur plat bistable.

Le plongeur 8 est constitué d'un simple disque fabriqué par découpage ou étampage. Une pièce 13 faisant office de support du clapet 10 est fixée au centre du disque. Elle a comme deuxième fonction de solidariser le plongeur 8 et le ressort 9. Ce dernier est constitué d'un ressort plat découpé et ajouré. Ce ressort assure deux fonctions distinctes :
1) le guidage du plongeur afin d'éviter tout frottement latéral
2) garantir la force de rappel du plongeur et la force permettant de rendre le système clapet buse étanche.

La deuxième partie de l'actionneur faisant office d'élément fixe et de circuit magnétique de l'électroaimant est constitué de trois pièces : Le circuit externe 12, un aimant permanent 14 et une rondelle 15, fixées l'une à l'autre.

La bobine 11 est de type autoporté. Elle est collée contre une plaquette plastique 16 sur laquelle deux picots 17 font office de connecteur électrique externe. Les deux fils de la bobine s'enroulent 18 sur les picots susmentionnés et y sont soudés. Un trou de forme adaptée dans le circuit magnétique 12 permet ainsi de placer la bobine sans autre manipulation à l'intérieur de la partie fixe de l'électroaimant. La soudure est protégée par un joint de résine 28. La présence de l'aimant 14 au centre du circuit magnétique 12 augmente la force de rémanence du système jusqu'à transformer l'électroaimant monostable en activateur bistable. Les deux points d'équilibre du système (bistabilité) sont créés par l'optimisation des paramètres géométriques du circuit magnétique 12, de l'aimant 14 et du ressort 9. Dans le cas d'un électroaimant plat, l'amplitude du champ magnétique diminue rapidement en fonction de l'entrefer noyau fixe/plongeur. Ceci permet l'utilisation d'un aimant de très faible dimension car les forces de collage du plongeur contre le noyau fixe sont très fortes en comparaison de celle d'un électroaimant à plongeur piston, utilisé traditionnellement dans une électrovanne. La renverse de bistabilité du système se situe ainsi à entrefer réduit. Un shim ou écran en acier inoxydable 29 peut être placé sur la surface déterminée par les parties inférieures du circuit magnétique au niveau de l'entrefer, afin de protéger les éléments en matériaux ferromagnétiques 12,15 et la bobine 11 du contact avec le fluide passant dans la vanne. Cette pièce est maintenue latéralement par un joint à élasticité élevée.

Une bague 20 détermine par son épaisseur directement les valeurs des forces de précontrainte du ressort 9, c'est-à-dire la force du ressort 9 sur le plongeur 8 lors des situations d'ouverture et de fermeture. Elle est maintenue contre la partie fixe de l'électroaimant par le ressort plat 9.

Le corps principal du système 21 a pour fonction d'intégrer la partie pilote à la partie pneumatique de la vanne, ainsi que de fixer la vanne sur son embase externe. La miniaturisation du système entier dépend de la forme de cette pièce intermédiaire. Le pilote est fixé sur le corps principal de la vanne, par exemple par deux méthodes différentes : le collage ou le soudage d'une pièce encastrée 22, empêchant la partie fixe de l'électroaimant de se déplacer vers le haut lorsque le système est mis sous pression.

La buse 3 du pilote est située sur la partie supérieure du corps principal 21. Son échappement de type échappement central se vide dans la chambre inférieure 2 sous la membrane 1. Le conduit d'éjection relie ainsi la buse 3 du pilote au trou central du support membrane 5; afin de garantir l'ouverture de la vanne, il doit être étanche pour toutes les positions de la membrane. Cette étanchéité est assurée par l'insertion entre les sorties de la buse pilote et de la vanne d'un joint élastomère intermédiaire. Il est composé d'un support 24 soudé à la sortie du pilote, sur lequel une rondelle en élastomère 23 est fixée. Cette rondelle 23 est plaquée par un ressort hélicoïdal 25 contre la buse que comporte la partie supérieure du support membrane 5. Ainsi lorsque la membrane principale 1 de la vanne se trouve en position ouverte ou fermée, la rondelle en élastomère 23 suit la buse du support membrane 5 et garantit l'étanchéité à cet endroit.

Un filtre 27 protège les cavités du pilote. Il est placé à l'entrée de la vanne pilote et protège les orifices 4.

Ce système montre plusieurs avantages par rapport à une construction traditionnelle. Le pilote à activateur électromagnétique plat et échappement central offre une solution à la miniaturisation des appareils sanitaires tout en augmentant les performances dans tous les domaines. Cette configuration permet l'utilisation d'un aimant permanent de faible épaisseur et d'un contre-ressort progressif pour assurer la bistabilité, ce qui procure les avantages de diminuer les puissances de commutation et de réduire la hauteur du pilote, donc les dimensions de la vanne. La faible épaisseur du plongeur lui confère une liberté de déplacement latéral rendant le système peu sensible à la déposition de calcaire et au début de corrosion des parties métalliques en contact avec le fluide.

Lorsque la buse 3 du pilote est obturée, une partie du fluide entrant dans la chambre d'arrivée du fluide 30 par le canal 31 traverse la membrane 1 par l'orifice 7 calibré et pénètre dans la chambre intermédiaire 6. Cette chambre intermédiaire 6 est alors mise sous pression. La force résultante agit sur la membrane principale 1 directement et par l'intermédiaire de la rondelle élastomère 23, laquelle est appliquée sur le support de membrane 5. Comme la surface de la partie mobile exposée à la chambre intermédiaire est supérieure à la surface inférieure de la membrane exposée directement à la pression d'entrée, la membrane 1 est appliquée sur la buse du conduit de sortie 2 de la vanne et celle-ci est fermée (moitié gauche de la figure 1).

Si par contre la buse 3 du pilote est ouverte, le fluide pénétrant dans la chambre intermédiaire 6 s'écoule par les trous 4 et la buse 3 dans le conduit de sortie 2 de la vanne. La pression dans la chambre intermédiaire 6 diminue et la membrane 1 est déplacée par le flux de fluide entrant, la buse du conduit d'échappement 2 est alors ouverte et le fluide passe directement de la chambre d'alimentation 30 au conduit de sortie 2 (moitié droite de la figure 1).

Le plongeur 8 de la vanne pilote se déplace dans une chambre 34 du corps 21 de cette vanne alimentée en fluide par un passage 4 et éjectant ce fluide par la buse 3 entre une position pour laquelle le clapet élastomère 10 qu'il porte obture la buse 3 et une position pour laquelle il est en contact avec la face frontale libre du circuit magnétique de la vanne, à savoir la face annulaire du circuit 12 et la face libre de la rondelle 15 ou la face de l'écran 29. Le ressort annulaire 9 guide le plongeur 8 dans ses déplacements et détermine sa pression d'appui sur la buse 3.

Une impulsion positive dans la bobine 11 attire le plongeur 8 qui est ensuite maintenu dans cette position par l'attraction de l'aimant permanent. Une impulsion négative dans la bobine repousse le plongeur qui est ensuite maintenu dans cette seconde position, contre la buse 3, par l'action du ressort 9.

L'énergie de commande peut être faible et les positions stables du plongeur sont garanties d'une part par l'aimant permanent 14 et d'autre part par le ressort 9.

Cette servo vanne a l'avantage d'être très compacte de par les petites dimensions de la vanne pilote, son fonctionnement est très fiable et elle est peu sujette à l'entartrage et au début de corrosion des matériaux métalliques de l'électroaimant.

## Revendications

1. Vanne électromagnétique bistable, comportant un électroaimant, dont la partie fixe est formée d'un circuit magnétique externe (12) présentant une gorge annulaire recevant une bobine (11) et entourant celle-ci entièrement, mais partiellement seulement intérieurement; un aimant permanent (14) disposé concentriquement à la bobine et développant un champ magnétique suivant une direction parallèle à celui créé par la bobine; une rondelle (15) remplissant le reste du vide central du circuit (12) et dont la face libre est située dans le même plan que la face annulaire libre dudit circuit (12); et comportant encore un plongeur plat (8) situé en regard desdites faces libres du circuit (12) et de la rondelle (15) soumis à l'action d'un ressort (9) et se déplaçant dans une chambre (34) du corps (21) de la vanne reliée à un conduit d'arrivée de fluide (4) et comportant une buse (3) d'éjection dudit fluide entre une position stable pour laquelle le plongeur obture la buse (3) et une seconde position stable pour laquelle la buse (3) est ouverte.

2. Vanne selon la revendication 1, **caractérisée par le fait que** l'aimant permanent (14) est placé dans la partie centrale du circuit magnétique (12) entouré par la bobine (11).

3. Vanne selon la revendication 1 ou 2, **caractérisée par le fait que** le plongeur est guidé dans ses déplacements par un ressort présentant la forme d'une rondelle (9) découpée prenant appui sur la périphérie de la chambre du corps (21), cette rondelle ressort tendant à appliquer le plongeur (8) contre la buse (3).

4. Vanne selon l'une des revendications précédentes, **caractérisée par le fait qu'**elle constitue le pilote d'une vanne servo comportant une chambre annulaire d'arrivée (30) de fluide, un canal central d'échappement (2) du fluide, une membrane (1) montée sur un support (5) central mobile et sur les parois de la chambre d'arrivée de fluide; cette membrane définissant une chambre intermédiaire (6) entre la chambre d'arrivée de fluide (30) et la chambre (34) du corps (21) de la vanne électromagnétique; cette chambre intermédiaire (6) étant reliée par des passages calibrés (7,4) à la chambre d'arrivée de fluide (30) et à la chambre (34) de la vanne pilote; **par le fait que** la buse (3) de la vanne pilote débouche à travers le support de membrane (5) dans le conduit d'évacuation de fluide (2); et **par le fait qu'**une rondelle élastomère (23) montée sur la buse (3) est soumise à l'action d'un ressort (25) appliquant sa périphérie contre le support de membrane (5) assurant l'étanchéité entre le trou central de ce support de membrane (5) et la buse (3) de la vanne pilote.

5. Vanne électromagnétique bistable selon la revendication 1 ou la revendication 4, **caractérisée par le fait que** le circuit magnétique (12) est fixé sur le corps (21).

6. Vanne selon la revendication 1, **caractérisée par le fait qu'**un écron ou shim 29 est disposé contre le circuit magnétique sous la bobine, empêchant tout contact entre le fluide et ce circuit magnétique.

7. Vanne selon l'une des revendications précédentes, **caractérisée par le fait que** le plongeur (8) comporte un disque central (13) pinçant le ressort (9) contre le plongeur (8), la face libre de ce disque comportant un obturateur élastomère (10) coopérant avec la buse (3).

8. Vanne selon la revendication 7, **caractérisée par le fait que** le ressort est un disque annulaire ajouré.

9. Vanne selon l'une des revendications précédentes, **caractérisée par le fait que** la bobine est autoportée et solidaire d'une rondelle comportant des picots (7) recevant les fils du solénoïde.

10. Vanne selon l'une des revendications précédentes, **caractérisée par le fait qu'**elle comporte une bague (20) située entre le bord périphérique du ressort (9) et la face frontale du circuit magnétique (12) ou le shim (29).

## Patentansprüche

1. Bistabiles elektromagnetisches Ventil mit einem Elektromagneten, dessen feststehender Abschnitt aus einem äusseren magnetischen Kreis (12) gebildet wird, der eine Ringnut aufweist, die eine Spule (11) aufnimmt, und der diese ganz umgibt, aber von innen nur teilweise; mit einem Dauermagneten (14), der konzentrisch zur Spule angeordnet ist und ein Magnetfeld in einer Richtung entwickelt, das einer Richtung folgt, die parallel zur Richtung des von der Spule entwickelten Magnetfeldes ist; und mit einem Rundstück (15), das den verbleibenden Leerraum in der Mitte des Kreises (12) ausfüllt und dessen freie Seite in der gleichen Ebene liegt wie die ringförmige freie Seite des Kreises (12); und weiter mit einem flachen Kolben (8), der den freien Seiten des Kreises (12) und des Rundstücks (15) zugewandt und der Wirkung einer Feder (9) ausgesetzt ist und der sich in einer Kammer (34) des Ventilgehäuses (21), die mit einer Fluidzuleitung (4) verbunden ist und eine Austrittsdüse (3) für das Fluid umfasst, zwischen einer stabilen Lage, in der der Kolben die Düse (3) verdeckt, und einer zweiten stabilen Lage, in der die Düse (3) offen ist, bewegt.

2. Ventil nach Anspruch 1, **dadurch gekennzeichnet, dass** der Dauermagnet (14) im von der Spule (11) umgebenen zentralen Abschnitt des magnetischen Kreises (12) untergebracht ist.

3. Ventil nach Anspruch 1 oder 2, **dadurch gekennzeichnet, dass** der Kolben in seinen Bewegungen durch eine Feder geführt wird, die die Gestalt einer ausgeschnittenen Rundscheibe (9) besitzt und an der Peripherie der Kammer des Gehäuses (21) ruht, wobei diese Rundscheibe den Kolben (8) gegen die Düse (3) zu drücken sucht.

4. Ventil nach einem der vorangehenden Ansprüche, **dadurch gekennzeichnet, dass** sie das Steuerventil eines Servoventils darstellt, das eine ringförmige Fluideinlaufkammer (30), einen zentralen Fluidaustrittskanal (2) sowie eine Membran (1) umfasst, die auf einen zentralen, beweglichen Träger (5) und auf die Wände der Fluideinlaufkammer montiert ist; wobei diese Membran eine Zwischenkammer (6) zwischen der Fluideinlaufkammer (30) und der Kammer (34) des Gehäuses (21) des elektromagnetischen Ventils definiert; und wobei diese Zwischenkammer (6) durch kalibrierte Durchlässe (7, 4) mit der Fluideinlaufkammer (30) und der Kammer (34) des Steuerventils verbunden ist; dadurch, dass die Düse (3) des Steuerventils durch den Träger der Membran (5) hindurchgehend in den Fluidaustrittskanal (2) mündet; und dadurch, dass eine auf die Düse (3) montierte Elastomerscheibe (23) der Wirkung einer Feder (25) ausgesetzt ist, die ihre Peripherie gegen den Membranträger (5) drückt und so den dichten Abschluss zwischen dem zentralen Loch dieses Membranträgers (5) und der Düse (3) des Steuerventils gewährleistet.

5. Bistabiles elektromagnetisches Ventil nach Anspruch 1 oder Anspruch 4, **dadurch gekennzeichnet, dass** der magnetische Kreis (12) auf dem Gehäuse (21) befestigt ist.

6. Ventil nach Anspruch 1, **dadurch gekennzeichnet, dass** eine Abschirmung oder ein Unterlegplättchen (29) unter der Spule auf den magnetischen Kreis aufgesetzt ist und jede Berührung zwischen dem Fluid und diesem magnetischen Kreis verhindert.

7. Ventil nach einem der vorangehenden Ansprüche, **dadurch gekennzeichnet, dass** der Kolben (8) eine zentrale Scheibe (13) umfasst, die die Feder (9) gegen den Kolben (8) drückt, wobei die freie Seite dieser Scheibe einen mit der Düse (3) zusammenwirkenden Elastomerverschluss (10) umfasst.

8. Ventil nach Anspruch 7, **dadurch gekennzeichnet, dass** die Feder eine durchbrochene Ringscheibe ist.

9. Ventil nach einem der vorangehenden Ansprüche, **dadurch gekennzeichnet, dass** die Spule selbsttragend und fest mit einer Rundscheibe verbunden ist, die Spitzen (7) umfasst, die die Drähte des Solenoids aufnehmen.

10. Ventil nach einem der vorangehenden Ansprüche, **dadurch gekennzeichnet, dass** es einen Ring (20) umfasst, der sich zwischen dem Aussenrand der Feder (9) und der Vorderseite des magnetischen Kreises (12) oder des Unterlegplättchens (12) befindet.

## Claims

1. A bistable electromagnetic valve comprising an electromagnet, whose stationary portion is formed by an external magnetic circuit (12) presenting an annular groove receiving a coil (11) and surrounding it entirely, but only partially on the inside; a permanent magnet (14) disposed concentrically with the coil and developing a magnetic field following a direction parallel to that created by the coil; a washer (15) filling the remainder of the central void of the circuit (12) and whose free face is situated in the same plane as the free annular face of said circuit (12); and further comprising a flat plunger (8) situated facing said free faces of the circuit (12) and of the washer (15), subjected to the action of a spring (9) and moving in a chamber (34) of the body (21) of the valve, which chamber is connected to a fluid inlet duct (4) and includes a nozzle (3) for ejecting said fluid, the plunger moving between a stable position in which the plunger closes the nozzle (3) and a second stable position in which the nozzle (3) is open.

2. A valve according to claim 1, **characterized by** the fact that the permanent magnet (14) is placed in the central portion of the magnetic circuit (12) surrounded by the coil (11).

3. A valve according to claim 1 or claim 2, **characterized by** the fact that the plunger is guided in its movements by a spring presenting the shape of a cutout washer (9) bearing on the periphery of the chamber of the body (21), said spring washer urging the plunger (8) against the nozzle (3).

4. A valve according to any one of the preceding claims, **characterized by** the fact that it constitutes the pilot of a servo-valve including an annular fluid inlet chamber (30), a central escape channel (2) for the fluid, and a diaphragm (1) mounted on a moving central support (5) and on the walls of the fluid inlet chamber; said diaphragm defining an intermediate chamber (6) between the fluid inlet chamber (30) and the chamber (34) of the body (21) of the electromagnetic valve; said intermediate chamber (6) being connected via calibrated passages (7, 4) to the fluid inlet chamber (30) and to the chamber (34) of the pilot valve; by the fact that the nozzle (3) of the pilot valve opens out through the diaphragm support (5) in the fluid outlet duct (2); and by the fact that an elastomer washer (23) mounted on the nozzle (3) is subjected to the action of a spring (25) whose periphery bears against the diaphragm support (5), providing sealing between the central hole of said diaphragm support (5) and the nozzle (3) of the pilot valve.

5. A bistable electromagnetic valve according to claim 1 or claim 4, **characterized by** the fact that the magnetic circuit (12) is secured to the body (21).

6. A valve according to claim 1, **characterized by** the fact that a screen or shim (29) is placed against the magnetic circuit beneath the coil, preventing any contact between the fluid and the magnetic circuit.

7. A valve according to any one of the preceding claims, **characterized by** the fact that the plunger (8) comprises a central disk (13) pinching the spring (9) against the plunger (8), the free face of the disk including an elastomer shutter (10) co-operating with the nozzle (3).

8. A valve according to claim 7, **characterized by** the fact that the spring is a perforated annular disk.

9. A valve according to any one of the preceding claims, **characterized by** the fact that the coil is self-supporting and is secured to a washer including pinholes (7) receiving the wires of the solenoid.

10. A valve according to any one of the preceding claims, **characterized by** the fact that it includes a ring (20) situated between the peripheral edge of the spring (9) and the front face of the magnetic circuit (12) or the shim (29).
